# EUROPEAN PATENT SPECIFICATION

(11) **EP 4 407 358 B1**
(45) Date of publication and mention of the grant of the patent: **02.09.2026**
(21) Application number: 22871915.9
(22) Date of filing: 19.09.2022
(51) Int. Cl.: G02B 7/10, G03B 30/00, G02B 13/00, G02B 15/00, G03B 5/00, H04N 23/54, H04N 23/55, H04N 23/57

(54) **CAMERA MODULE AND ELECTRONIC DEVICE**
KAMERAMODUL UND ELEKTRONISCHE VORRICHTUNG
MODULE DE CAMÉRA ET DISPOSITIF ÉLECTRONIQUE

(30) Priority: 24.09.2021 CN 202111120681
(43) Date of publication of application: 31.07.2024
(73) Proprietor: Vivo Mobile Communication Co., Ltd., Dongguan, Guangdong 523863 (CN)
(72) Inventor: REN, Guangxu, Dongguan, Guangdong 523863 (CN); ZHOU, Shuaiyu, Dongguan, Guangdong 523863 (CN); ZHANG, Jun, Dongguan, Guangdong 523863 (CN); LIU, Xiaoyong, Dongguan, Guangdong 523863 (CN)
(74) Representative: Conti, Marco
(86) International application number: PCT/CN2022/119637
(87) International publication number: WO 2023/045869

(56) References cited:
- CN-A- 112 526 700
- CN-A- 112 637 452
- CN-U- 210 626 755
- JP-A- 2006 178 361
- TW-A- 201 323 969
- US-A1- 2002 135 887
- US-A1- 2002 135 887
- US-A1- 2004 062 537

## Description

### TECHNICAL FIELD

This application relates to the field of camera shooting technologies, and in particular to a camera module and an electronic device.

### BACKGROUND

Nowadays, as camera shooting technologies of electronic devices are increasingly improved, it is expected that higher quality images can be shot by using the electronic devices.

In an actual shooting process, a shot object may be magnified through optical zoom. The optical zoom may enlarge the shot object by changing a distance between a lens and the shot object. Therefore, the lens needs to be moved in a zoom process. To implement movement of the lens, a matching protrusion may be disposed on one lens tube, and a sliding groove may be disposed on the other lens tube. The matching protrusion slidably cooperates with the sliding groove, to implement relative movement between the two lens tubes, finally implementing movement of the lens.

However, to enlarge a zoom range of a camera module, a multi-level telescopic structure usually needs to be designed, and there is a complicated sleeving relationship between all levels of the telescopic structure. This causes a connection structure for all levels of the telescopic structure to be relatively complicated. Therefore, a structure of a conventional camera module is difficult to design.

US 2002/135887 Al discloses a camera module with motor-driven axial movement of lens elements using an integrated cam-based drive mechanism.

### SUMMARY

Embodiments of this application are intended to provide a camera module and an electronic device, to resolve a problem that a structure of the camera module is difficult to design.

To resolve the technical problem, this application is implemented as follows.

According to a first aspect, an embodiment of this application provides a camera module. The camera module includes: a base, a photosensitive chip, a first lens tube, a first lens, a second lens, a driving lens tube, a first support, a first driving mechanism, and a second driving mechanism.

The photosensitive chip is disposed in the base, and the driving lens tube is rotatably connected to the base. The first lens tube is sleeved on the driving lens tube. The first lens tube is connected to the driving lens tube through a first matching protrusion and a first spiral guide groove. The first support is movably disposed on the base. The first lens is provided with the first lens. The first support is provided with the second lens. The second lens is located between the photosensitive chip and the first lens.

The first driving mechanism is connected to the driving lens tube. The first driving mechanism drives, through the driving lens tube, the first lens tube to move in a first direction with the cooperation of the first matching protrusion and the first spiral guide groove.

The second driving mechanism includes a first driving source, a screw, and a nut. The first driving source is disposed on the base, and the first driving source is connected to the screw. The nut threadedly cooperates with the screw. The nut is connected to the first support. The nut drives the first support to move in the first direction. The first direction is a direction close to or away from the photosensitive chip.

According to a second aspect, an embodiment of this application provides an electronic device, including the foregoing camera module.

In this embodiment of this application, the first driving mechanism may drive, through the driving lens tube, the first lens tube to move with the cooperation of the first matching protrusion and the first spiral guide groove, so that the first lens is close to or away from the photosensitive chip. The second driving mechanism may drive the first support to move, so that the second lens is close to or away from the photosensitive chip, to implement zooming of the camera module. Movement of the first lens and the second lens may enable the camera module to achieve a relatively good zooming effect. In addition, the first driving mechanism and the second driving mechanism may respectively drive the first lens and the second lens to move. Therefore, neither the first lens nor the second lens needs to be provided with an excessively complicated multi-level telescopic structure. Therefore, in this embodiment, a structural design difficulty for the camera module may be reduced.

### BRIEF DESCRIPTION OF DRAWINGS

FIG. 1 is a schematic diagram of a partial structure of a camera module according to an embodiment of this application;
FIG. 2 is a schematic diagram of the structure shown in FIG. 1 after a base is removed;
FIG. 3 is a sectional view of a camera module according to an embodiment of this application;
FIG. 4 is an exploded view of a partial structure of a camera module according to an embodiment of this application; and
FIG. 5 is an exploded view of the other partial structure of the camera module according to an embodiment of this application.

### Reference numerals:

110-base, 111-baseboard, 120-first lens tube, 121-first matching protrusion, 130-first lens, 140-second lens, 150-driving lens tube, 151-body member, 152-transmission member, 153-installation member, 154-second spiral guide groove, 155-first driving groove, 156-rack part, 160-first support, 161-first guide part, 162-notch, 170-first driving mechanism, 171-second driving source, 172-worm, 173-worm gear, 174-transmission wheel, 180-second driving mechanism, 181-first driving source, 182-screw, 183-nut, 184-third elastic member, 185-installation support, 190-second support, 191-sunken hole, 192-extension part, 193-installation groove, 210-third lens, 220-first elastic member, 230-second elastic member, 240-second lens tube, 241-first spiral guide groove, 242-first driving protrusion, 243-second driving protrusion, 250-driven lens tube, 251-second matching protrusion, 252-first limiting vertical groove, 253-second driving groove, 270-first guide column, 280-second guide column, 290-lens support, 291-installation protrusion.

### DESCRIPTION OF EMBODIMENTS

The following clearly and completely describes technical solutions in embodiments of this application with reference to accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that the data used in such way is interchangeable in proper circumstances, so that the embodiments of this application can be implemented in an order other than the order illustrated or described herein. In addition, in this specification and the claims, "and/or" represents at least one of connected objects, and a character "/" generally represents an "or" relationship between associated objects.

With reference to the accompanying drawings, an electronic device provided in the embodiments of this application will be described in detail by using specific examples and application scenarios for the embodiments.

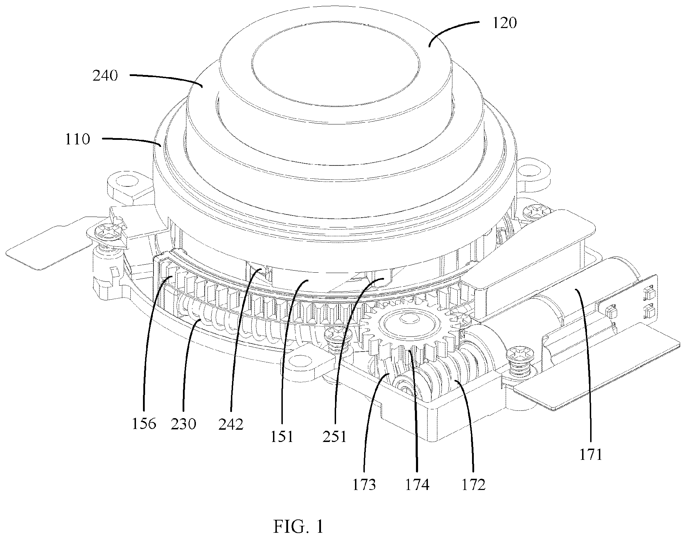

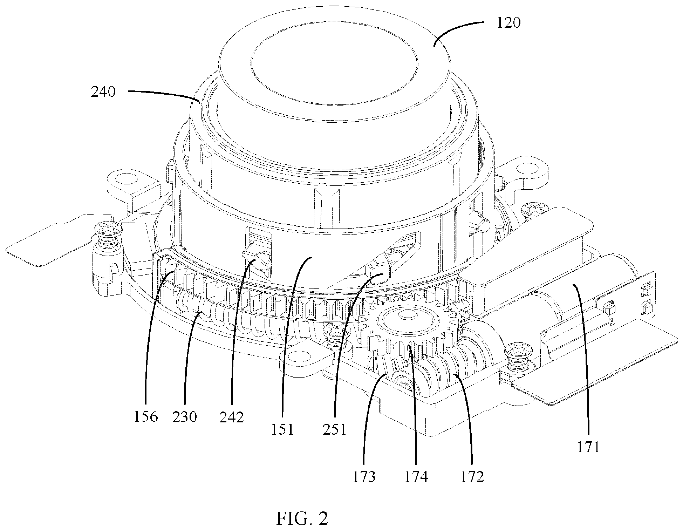

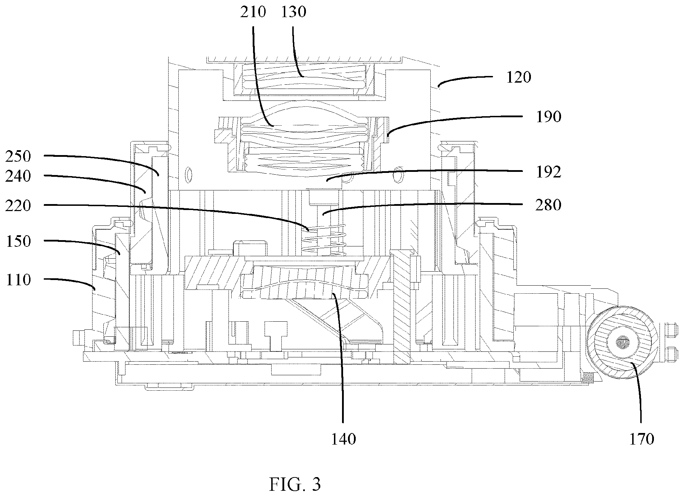

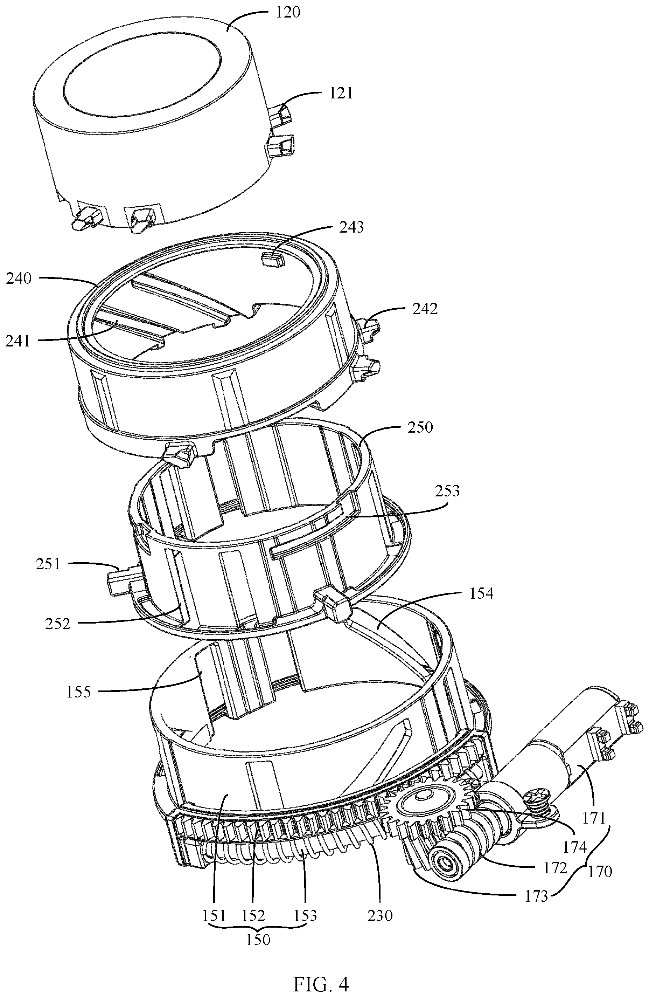

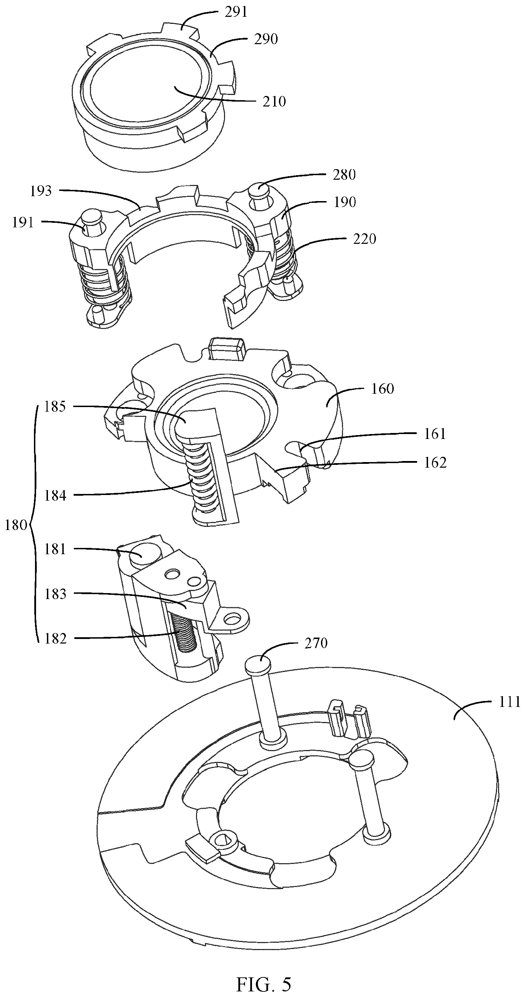

Refer to FIG. 1 to FIG. 5. Embodiments of this application disclose a camera module. The camera module includes a base 110, a photosensitive chip, a first lens tube 120, a first lens 130, a second lens 140, a driving lens tube 150, a first support 160, a first driving mechanism 170, and a second driving mechanism 180.

The photosensitive chip is disposed in the base 110. In addition to the photosensitive chip, other components for the camera module may further be disposed in the base 110. The driving lens tube 150 is rotatably connected to the base 110. The first lens tube 120 is sleeved on the driving lens tube 150. The first lens tube 120 is connected to the driving lens tube 150 through a first matching protrusion 121 and a first spiral guide groove 241. Optionally, one of the driving lens tube 150 and the first lens tube 120 is provided with the first matching protrusion 121, and the other is provided with the first spiral guide groove 241, so that the first lens tube 120 may be directly driven, through the driving lens tube 150, to expand and contract. The first support 160 is movably disposed on the base 110. The first lens tube 120 is provided with the first lens 130, and the first support 160 is provided with the second lens 140. The second lens 140 is located between the photosensitive chip and the first lens 130. The photosensitive chip may be configured to receive light that penetrates the first lens 130 and the second lens 140, and finally convert an optical signal into a digital image signal, to obtain an image.

The first driving mechanism 170 is connected to the driving lens tube 150, and the first driving mechanism 170 drives, through the driving lens tube 150, the first lens tube 120 to move in a first direction with the cooperation of the first matching protrusion 121 and the first spiral guide groove 241. The second driving mechanism 180 is connected to the first support 160, and the second driving mechanism 180 drives the first support 160 to move in the first direction. The first direction is a direction close to or away from the photosensitive chip. In other words, the first driving mechanism 170 may drive the first lens 130 to be close to the photosensitive chip or away from the photosensitive chip, thereby changing a distance between the first lens 130 and the photosensitive chip. The second driving mechanism 180 may drive the second lens 140 to be close to the photosensitive chip or away from the photosensitive chip, thereby changing a distance between the second lens 140 and the photosensitive chip. Optionally, the first driving mechanism 170 may output a rotation driving force, and may include components such as a motor. The second driving mechanism 180 may output a telescopic driving force and may include components such as a telescopic cylinder.

Optionally, the first driving mechanism 170 may include a second driving source 171, a worm 172, a worm gear 173, and a transmission wheel 174. The driving lens tube 150 may be provided with a rack part 156. An output shaft of the second driving source 171 and the worm 172 are coaxially disposed, and therefore the second driving source 171 may drive the worm 172 to rotate. The worm 172 is engaged with the worm gear 173, and therefore, the worm 172 may drive the worm gear 173 to rotate. The worm gear 173 is engaged with the transmission wheel 174, and therefore, the worm gear 173 may drive the transmission wheel 174 to rotate. The transmission wheel 174 is engaged with the rack part 156, so that the driving lens tube 150 is driven, through the rack part 156, to rotate. This first driving mechanism 170 has advantages of a simple structure, high transmission precision, long life, and the like.

In an embodiment of this application, the first driving mechanism 170 may drive, through the driving lens tube 150, the first lens tube 120 to move with the cooperation of the first matching protrusion 121 and the first spiral guide groove 241, so that the first lens 130 is close to or away from the photosensitive chip. The second driving mechanism 180 may drive the first support 160 to move, so that the second lens 140 is close to or away from the photosensitive chip, to implement zooming of the camera module. Movement of the first lens 130 and the second lens 140 may enable the camera module to achieve a relatively good zooming effect. In addition, the first driving mechanism 170 and the second driving mechanism 180 may respectively drive the first lens 130 and the second lens 140 to move. Therefore, neither the first lens 130 nor the second lens 140 needs to be provided with an excessively complicated multi-level telescopic structure. Therefore, in this embodiment, a structural design difficulty for the camera module may be reduced.

The first driving mechanism 170 and the second driving mechanism 180 may work simultaneously or may work successively. When the first driving mechanism 170 and the second driving mechanism 180 work simultaneously, positions of the first lens 130 and the second lens 140 may change simultaneously, so that the camera module switches to a target state more quickly, thereby implementing fast zooming.

In an optional embodiment, the second driving mechanism 180 includes a first driving source 181, a screw 182, and a nut 183. The first driving source 181 is disposed on the base 110, and the first driving source 181 is connected to the screw 182. The nut 183 threadedly cooperates with the screw 182, and the nut 183 is connected to the first support 160. The nut 183 drives the first support 160 to move in the first direction. Optionally, the base 110 may include a baseboard 111, and the first driving source 181 may be disposed on the baseboard 111. Optionally, the first driving source 181 and the screw 182 may be disposed in parallel and both extend in the first direction, so that a structure of the second driving mechanism 180 is more compact. The first driving source 181 may drive the screw 182 to rotate, and the screw 182 may drive the nut 183 to move in the first direction, to drive the first support 160 to move in the first direction. It should be noted that the nut 183 does not need to be a standard member, provided that the nut 183 is provided with an internal thread. This second driving mechanism 180 has advantages of a compact structure, high transmission accuracy, and the like.

Optionally, the second driving mechanism 180 further includes a third elastic member 184. The third elastic member 184 is disposed between the nut 183 and the first support 160. The nut 183 drives, through the third elastic member 184, the first support 160 to move in the first direction. When the first support 160 is subject to an external force, the third elastic member 184 enables the first support 160 to move in a direction close to the photosensitive chip. When the first support 160 is subject to an external force, the external force acts on the third elastic member 184. The third elastic member 184 may be deformed to buffer the external force, preventing components such as the first support 160 and the second driving mechanism 180 from being damaged due to the external force.

The second driving mechanism 180 may further include an installation support 185. The installation support 185 is connected to the first support 160, and a guide rod may be disposed on the installation support 185. The third elastic member 184 may be sleeved outside the guide rod, and one end of the nut 183 is also sleeved outside the guide rod. In this case, the third elastic member 184 is disposed between the installation support 185 and the end of the nut 183. The nut 183 may drive, through the third elastic member 184, the installation support 185 to move, and the installation support 185 further drives the first support 160 to move. The guide rod may limit lateral deformation of the third elastic member 184, to facilitate power transmission.

To implement a lightweight design for the camera module, an edge of the first support 160 is provided with a notch 162, and the second driving mechanism 180 is at least partially located in the notch 162. It can be learned that the notch 162 may not only reduce weight of the first support 160, but also avoid the second driving mechanism 180, so that space additionally occupied by the second driving mechanism 180 is smaller. Therefore, a structure of the camera module structure is more compact.

To enlarge a zoom range of the camera module, the camera module may further include a second support 190 and a third lens 210. The second support 190 is movably disposed on the first support 160, and the second support 190 is provided with the third lens 210. The third lens 210 is located between the first lens 130 and the second lens 140. Optionally, a third driving mechanism may be disposed on the first support 160. The third driving mechanism includes a telescopic cylinder or a coil magnet assembly. Alternatively, another driving solution may be used, provided that the second support 190 can be driven to move relative to the first support 160. Because distances among the third lens 210, the first lens 130, and the second lens 140 may vary, more zoom times may be obtained by moving the third lens 210.

It should be noted that a quantity of the first lens 130, the second lens 140, and the third lens 210 may be one or at least two separately. Specific quantities of the first lens 130, the second lens 140, and the third lens 210 may be determined according to an imaging requirement for the camera module, which is not limited in this embodiment of this application.

In another optional embodiment, the camera module further includes a first elastic member 220. The first elastic member 220 is disposed between the first support 160 and the second support 190. The second driving mechanism 180 drives, through the first support 160 and the first elastic member 220, the second support 190 to move in the first direction. When the second support 190 is subject to an external force, the first elastic member 220 enables the second support 190 to move in a direction close to the photosensitive chip. In a case that the second driving mechanism 180 exerts an acting force on the first support 160, when the first support 160 moves, the second support 190 may be driven, through the first elastic member 220, to move, to implement synchronous movement of the second lens 140 and the third lens 210. When the second support 190 is subject to an external force, the first elastic member 220 may be deformed, to buffer the external force, preventing components such as the first support 160 and the second support 190 from being damaged due to the external force. In addition, the first elastic member 220 may allow the second support 190 to move relative to the first support 160. Therefore, a distance between the third lens 210 and the second lens 140 may be changed, to implement zooming. This zoom solution has advantages such as a simple structure.

To improve stability of the first support 160 during movement, the camera module further includes a first guide column 270. One of the base 110 and the first support 160 is provided with a first guide part 161, and the other is firmly connected to the first guide column 270. The first guide part 161 slidably cooperates with the first guide column 270. In this embodiment, the first guide column 270 may limit lateral movement of the first support 160, to provide guidance for movement of the first support 160, enabling the first support 160 to move more smoothly. Further, a plurality of first guide columns 270 may be disposed. The plurality of first guide columns 270 cooperate with a plurality of first guide parts 161 in a one-to-one correspondence, to optimize a guide effect.

To improve stability of the second support 190 during movement, the camera module further includes a second guide column 280. One of the first support 160 and the second support 190 is provided with a second guide part, and the other is firmly connected to the second guide column 280. The second guide part slidably cooperates with the second guide column 280. In this embodiment, the second guide column 280 may limit lateral movement of the second support 190, to provide guidance for movement of the second support 190, enabling the second support 190 to move more smoothly. Further, a plurality of second guide columns 280 may be disposed. The plurality of second guide columns 280 cooperate with a plurality of second guide parts in a one-to-one correspondence, to optimize the guide effect.

Both the first guide part 161 and the second guide part may be disposed as guide holes. In another embodiment, the first guide part 161 is disposed on an edge of the first support 160, the first guide part 161 is a guide notch, the second guide part is disposed on an edge of the second support 190, and the second guide part is the guide hole. Because the first support 160 is to be connected to both the base 110 and the second support 190, a structural strength of the first support 160 has a great impact on life of the camera module. The guide notch may meet a guide requirement and reduce an amount of a removed material of the first support 160, to increase the structural strength of the first support 160. The second support 190 is mainly connected to the first support 160. Therefore, a structure strength of the second support 190 has little impact on life of the camera module. The second guide part is disposed as a guide hole, which does not lead to an excessively small structure strength of the second guide part, and may increase a contact area between the second guide part and the second guide column 280, thereby improving the guide effect.

A connection position between the first elastic member 220 and the second support 190 may be staggered from a position in which the second guide part is located. However, in such disposing, a structure of the second support 190 may not compact enough, and a structural design difficulty for the second support 190 may be increased. Therefore, one side, facing the first support 160, of the second support 190 is provided with an extension part 192. The extension part 192 is provided with the second guide part, and the extension part 192 may at least partially extend into the first elastic member 220. In this embodiment, the extension part 192 may be used as a connection part between the second support 190 and the first elastic member 220. After the extension part 192 at least partially extends into the first elastic member 220, lateral deformation of the first elastic member 220 may be limited in an assisting manner, thereby better helping prolong life of the first elastic member 220. Because the extension part 192 and the second guide part are integrated together, a structure of the second support 190 is more compact, and a structure design difficulty for the second support 190 is lower. In addition, the second support 190 does not easily squeeze space for another component, better facilitating overall layout of the camera module.

Further, optionally, the extension part 192 is provided with a sunken hole 191, and the second guide part may be disposed on a bottom surface of the sunken hole 191. Compared with a solution in which the second guide part 191 penetrates the entire extension part 192, in this embodiment, the second guide part 191 penetrates only a part of the extension part 192, and one end, away from the first support 160, of the second guide column 280 may be closer to the first support 160, so that the first support 160 and the second support 190 are distributed more compactly, thereby facilitating miniaturization design for the camera module.

The third lens 210 may be directly installed on the second support 190. To better facilitate installation of the third lens 210 and replacement of the third lens 210, the camera module further includes a lens support 290. The lens support 290 is provided with the third lens 210, and an installation protrusion 291 is disposed on an edge of the lens support 290. The second support 190 is provided with an installation groove 193. The installation protrusion 291 cooperates with the installation groove 193. In this embodiment, the lens support 290 is assembled with the second support 190 in a detachable connection manner. Therefore, the lens support 290 is detached easily. In addition, when the installation protrusion 291 is used to cooperate with the installation groove 193, no additional connector is needed, so that the camera module is assembled more simply.

The second support 190 may be an annular member. However, to reduce weight of the second support 190, in another embodiment, the second support 190 has a fifth end and a sixth end. There is an interval between the fifth end and the sixth end, that is, the second support 190 is not the annular member, and weight of the second support 190 is lower. In addition, space between the fifth end and the sixth end of the second support 190 may be further used to accommodate another component, so that space occupied by the camera module is smaller.

Optionally, the camera module further includes a second elastic member 230, and the driving lens tube 150 includes a body member 151 and a transmission member 152 that are disposed separately. A first end of the second elastic member 230 is connected to the body member 151, and a second end of the second elastic member 230 is connected to the transmission member 152. The first driving mechanism 170 is connected to the transmission member 152. Optionally, the transmission member 152 may be provided with the rack part 156, and the first driving mechanism 170 may drive, through the rack part 156, the transmission member 152 to rotate. When zooming needs to be performed, the first driving mechanism 170 drives, sequentially through the transmission member 152, the second elastic member 230, and the body member 151, the first lens tube 120 to move in the first direction. In a case that the first lens tube 120 is subject to an external force, the second elastic member 230 enables the first lens tube 120 to move in a direction close to the photosensitive chip. Because the body member 151 and the transmission member 152 are disposed separately, the body member 151 and the transmission member 152 may move separately. In other words, the transmission member 152 may transmit a driving force to the body member 151 through the second elastic member 230, to enable the body member 151 to rotate. When the transmission member 152 does not transmit the driving force to the body member 151, the body member 151 may rotate relative to the transmission member 152 under an action of an external force.

After the foregoing structure is used, when the first lens tube 120 is in an extension state, once the first lens tube 120 is subject to an external force, the first lens tube 120 may retract. In this case, although the first driving mechanism 170 does not operate, the first lens tube 120 may still move because the second elastic member 230 exists. That is, in a case that the first lens tube 120 is subject to an external force, the second elastic member 230 enables the first lens tube 120 to move in a direction close to the photosensitive chip. After the external force exerted on the first lens tube 120 disappears, the second elastic member 230 restores from deformation, so that the first lens tube 120 is driven, through the body member 151, to restore to the extension state. Therefore, the camera module may continuously operate in a case that the first lens tube 120 extends, and the first driving mechanism 170 does not need to redrive the first lens tube 120 to extend. It can be learned that the second elastic member 230 may convert, into elastic potential energy of the second elastic member 230, kinetic energy generated when the camera module is subject to a pressure because the camera module falls, collides, is artificially pressed, or the like, to buffer the pressure. Therefore, the first matching protrusion 121 is not easily broken when being squeezed, and other parts of the camera module are not easily subject to an impact force. Therefore, life of the camera module may be prolonged according to this embodiment.

When the camera module is provided with both the first elastic member 220 and the second elastic member 230, once the first lens tube 120 is subject to an external force, the first lens tube 120 is close to the photosensitive chip under an action of the second elastic member 230. When the first lens tube 120 is in contact with the second support 190, the first lens tube 120 presses the second support 190. Under an action of the first elastic member 220, the second support 190 is close to the photosensitive chip. When the external force exerted on the first lens tube 120 disappears, the first elastic member 220 and the second elastic member 230 simultaneously play a restoration action, so that the first lens tube 120 and the second support 190 are away from the photosensitive chip. When the second support 190 reaches an extreme position, the first lens tube 120 is continuously away from the photosensitive chip until the first lens tube 120 reaches an extreme position.

In an optional embodiment, the transmission member 152 has a third end and a fourth end, and there is an interval between the third end and the fourth end, that is, the transmission member 152 is not a closed annular structure, but an arc-shaped component with a notch. Due to existence of the notch, the second elastic member 230 is sleeved on the transmission member 152 through the notch. In this embodiment, the transmission member 152 is a rod-shaped component with a relatively simple structure, and the second elastic member 230 is directly sleeved on the transmission member 152. Therefore, according to this embodiment, a structure of and assembly for the camera module can be simplified, processing costs for the camera module can be reduced, and there is more space in which other components are disposed for the camera module.

In another optional embodiment, the driving lens tube 150 further includes an installation member 153. The installation member 153 and the transmission member 152 are disposed separately and are connected to each other. The second elastic member 230 is sleeved on the installation member 153, and the transmission member 152 is an annular member. In this embodiment, a second end of the second elastic member 230 is connected to the transmission member 152 through the installation member 153. Because the second elastic member 230 may be installed by using the installation member 153 that is additionally disposed, a structural design for the second elastic member 230 is not easily limited by the transmission member 152. Therefore, the second elastic member 230 may be more flexibly disposed, so that the second elastic member 230 has a stronger capability of absorbing an external force. Optionally, the installation member 153 may be an arc-shaped rod member, to facilitate installation of the second elastic member 230. In addition, the transmission member 152 is an annular member, so that the camera module performs a telescopic motion more stably. In addition, the annular transmission member 152 has a higher structural strength, which not only helps transmit a driving force, but also can withstand an action force exerted by the second elastic member 230, preventing damage to the transmission member 152 and the first driving mechanism 170 caused by this action force.

As mentioned above, the driving lens tube 150 may directly drive the first lens tube 120. In another embodiment, the camera module further includes a second lens tube 240. The second lens tube 240 is sleeved on the driving lens tube 150, and the first lens tube 120 is sleeved on the second lens tube 240. One of the first lens tube 120 and the second lens tube 240 is provided with the first spiral guide groove 241, and the other is provided with the first matching protrusion 121. In this embodiment, both the first lens tube 120 and the second lens tube 240 may be moved in the first direction. Therefore, a position of the first lens 130 relative to the photosensitive chip varies in a larger range, so that a zooming effect of the camera module is improved.

Optionally, a vertical groove may be disposed on the base 110, to limit rotation of the first lens tube 120, so that the first lens tube 120 moves only in the first direction. However, a moving distance of the first lens tube 120 may be limited by the base 110 in this embodiment. Therefore, in another embodiment, the camera module further includes a driven lens tube 250. The driven lens tube 250 is connected to the driving lens tube 150, and the second lens tube 240 is sleeved outside the driven lens tube 250. The driven lens tube 250 is provided with a second matching protrusion 251, and the driving lens tube 150 is provided with a second spiral guide groove 154. The driven lens tube 250 may move with the cooperation of the second matching protrusion 251 and the second spiral guide groove 154. The driven lens tube 250 is provided with a first limiting vertical groove 252 that extends in the first direction. The first lens tube 120 is provided with the first matching protrusion 121. One end of the first matching protrusion 121 penetrates the first spiral guide groove 241 and cooperates with the first limiting vertical groove 252. In addition, the base 110 is provided with a second limit vertical groove that extends in the first direction, and one end of the second matching protrusion 251 penetrates the second spiral guide groove 154 and cooperates with the second limiting vertical groove, to limit rotation of the driven lens tube 250. The driven lens tube 250 may limit rotation of the first lens tube 120 through the first limiting vertical groove 252. Because the driven lens tube 250 may be moved to a position higher than a position of the base 110, the driven lens tube 250 is less likely to limit a moving distance of the first lens tube 120, thereby improving the zooming effect of the camera module.

Movement of the second lens tube 240 may also be implemented with the cooperation of a matching protrusion and a spiral guide groove. However, to simplify a structure of the camera module, the driving lens tube 150 is provided with a first driving groove 155 that extends in the first direction, and the second lens tube 240 is provided with a first driving protrusion 242. The first driving protrusion 242 cooperates with the first driving groove 155. In addition, the driven lens tube 250 is provided with a second driving groove 253 that extends in a circumferential direction of the driven lens tube 250, the second lens tube 240 is provided with a second driving protrusion 243, and the second driving protrusion 243 cooperates with the second driving groove 253. When the driving lens tube 150 rotates, the driven lens tube 250 may be driven to move in the first direction, and the second lens tube 240 may be driven to rotate. When the driven lens tube 250 moves in the first direction, the second lens tube 240 is driven, with the cooperation of the second driving protrusion 243 and the second driving groove 253, to move in the first direction, to implement movement and rotation of the second lens tube 240, helping the second lens tube 240 drive the first lens tube 120 to move. In this embodiment, movement of the second lens tube 240 does not need to be implemented by using a spiral guide groove, and therefore, a structure of the camera module may be simplified.

Further, the second driving groove 253 may be disposed as an L-shaped groove, so that one end of the second driving groove 253 extends to an edge of the driven lens tube 250, to help assemble the second lens tube 240 and the driven lens tube 250.

Further, because a relatively good zooming effect can be implemented when the camera module drives, through the first driving mechanism 170 and the second driving mechanism 180, the first lens 130 and the second lens 140 to move separately, the first spiral guide groove 241 may be disposed as a linear guide groove, so that a structure of the first spiral guide groove 241 is simpler. Similarly, the second spiral guide groove 154 is a linear guide groove, thereby enabling a structure of the second spiral guide groove 154 simpler.

The first matching protrusion 121 may be disposed as a cylindrical protrusion. However, a matching area between the cylindrical protrusion and the first spiral guide groove 241 is relatively small, causing the first matching protrusion 121 and the first spiral guide groove 241 to be worn easily. Therefore, in another embodiment, the first matching protrusion 121 is provided with a first matching surface. The first matching surface is bonded to an inner wall of the first spiral guide groove 241. In this case, the first matching protrusion 121 is in contact with a surface of the first spiral guide groove 241, and a mating area between the first matching protrusion 121 and the first spiral guide groove 241 is larger, thereby reducing a wear amount of the first matching protrusion 121 and the first spiral guide groove 241. In addition, a structural strength of the first matching protrusion 121 and the first spiral guide groove 241 may be increased by using this structure.

Similarly, the second matching protrusion 251 is provided with a second matching surface. The second matching surface is bonded to an inner wall of the second spiral guide groove 154. Compared with the second matching protrusion 251 that is circular, the first matching protrusion 121 provided with the second matching surface is in contact with the first spiral guide groove 241. A matching area between the second matching protrusion 251 and the second spiral guide groove 154 is larger, thereby reducing a wear amount of the second matching protrusion 251 and the second spiral guide groove 154.

An embodiment of this application further discloses an electronic device. The electronic device includes the camera module in any one of the foregoing embodiments.

The electronic device disclosed in this embodiment of this application may be an electronic device such as an intelligent mobile phone, a tablet computer, an electronic book reader, a wearable device (for example, a smart watch), or an electronic game machine. A type of the electronic device is not specifically limited in this embodiment of this application.

The embodiments of this application are described above with reference to the accompanying drawings, but this application is not limited to the foregoing implementations, and the foregoing implementations are only illustrative and not restrictive. Under the enlightenment of this application, a person of ordinary skill in the art can make many forms without departing from the purpose of this application and the protection scope of the claims, all of which fall within the protection of this application.

## Claims

1. A camera module, **characterized by** comprising: a base (110), a photosensitive chip, a first lens tube (120), a first lens (130), a second lens (140), a driving lens tube (150), a first support (160), a first driving mechanism (170), and a second driving mechanism (180), wherein
the photosensitive chip is disposed in the base (110), the driving lens tube (150) is rotatably connected to the base (110), the first lens tube (120) is sleeved on the driving lens tube (150), the first lens tube (120) is connected to the driving lens tube (150) through a first matching protrusion (121) and a first spiral guide groove (241), the first support (160) is movably disposed on the base (110), the first lens tube (120) is provided with the first lens (130), the first support (160) is provided with the second lens (140), the second lens (140) is located between the photosensitive chip and the first lens (130),
the first driving mechanism (170) is connected to the driving lens tube (150), the first driving mechanism (170) drives, through the driving lens tube (150), the first lens tube (120) to move in a first direction with the cooperation of the first matching protrusion (121) and the first spiral guide groove (241),
the second driving mechanism (180) comprises a first driving source (181), a screw (182), and a nut (183), the first driving source (181) is disposed on the base (110), the first driving source (181) is connected to the screw (182), the nut (183) threadedly cooperates with the screw (182), the nut (183) is connected to the first support (160), the nut (183) drives the first support (160) to move in the first direction, and the first direction is a direction close to or away from the photosensitive chip.

2. The camera module according to claim 1, wherein the second driving mechanism (180) further comprises a third elastic member (184), the third elastic member (184) is disposed between the nut (183) and the first support (160),
the nut (183) drives, through the third elastic member (184), the first support (160) to move in the first direction, and
in a case that the first support (160) is subject to an external force, the third elastic member (184) enables the first support (160) to move in a direction close to the photosensitive chip.

3. The camera module according to claim 1, wherein an edge of the first support (160) is provided with a notch (162), and the second driving mechanism (180) is at least partially located in the notch (162).

4. The camera module according to claim 1, wherein the camera module further comprises a second support (190) and a third lens (210), the second support (190) is movably disposed on the first support (160), the second support (190) is provided with the third lens (210), and the third lens (210) is located between the first lens (130) and the second lens (140).

5. The camera module according to claim 4, wherein the camera module further comprises a first elastic member (220), and the first elastic member (220) is disposed between the first support (160) and the second support (190),
the second driving mechanism (180) drives, through the first support (160) and the first elastic member (220), the second support (190) to move in the first direction, and
in a case that the second support (190) is subject to an external force, the first elastic member (220) enables the second support (190) to move in a direction close to the photosensitive chip.

6. The camera module according to claim 5, wherein the camera module further comprises a first guide column (270), one of the base (110) and the first support (160) is provided with a first guide part (161), and the other is firmly connected to the first guide column (270), and the first guide part (161) slidably cooperates with the first guide column (270); and
the camera module further comprises a second guide column (280), one of the first support (160) and the second support (190) is provided with a second guide part, and the other is firmly connected to the second guide column (280), and the second guide part slidably cooperates with the second guide column (280).

7. The camera module according to claim 6, wherein an edge of the first support (160) is provided with the first guide part (161), the first guide part (161) is a guide notch, and an edge of the second support (190) is provided with the second guide part, and the second guide part is a guide hole.

8. The camera module according to claim 7, wherein one surface, facing the first support (160), of the second support (190) is provided with an extension part (192), the extension part (192) is provided with the second guide part, and the extension part (192) is capable of at least partially extending into the first elastic member (220).

9. The camera module according to claim 4, wherein the camera module further comprises a lens support (290), the lens support (290) is provided with the third lens (210), an edge of the lens support (290) is provided with an installation protrusion (291), the second support (190) is provided with an installation groove (193), and the installation protrusion (291) cooperates with the installation groove (193); and/or
the second support (190) has a fifth end and a sixth end, and there is an interval between the fifth end and the sixth end.

10. The camera module according to claim 1, wherein the camera module further comprises a second elastic member (230), the driving lens tube (150) comprises a body member (151) and a transmission member (152) that are disposed separately, a first end of the second elastic member (230) is connected to the body member (151), a second end of the second elastic member (230) is connected to the transmission member (152), and the first driving mechanism (170) is connected to the transmission member (152),
the first driving mechanism (170) drives, sequentially through the transmission member (152), the second elastic member (230), and the body member (151), the first lens tube (120) to move in the first direction, and
in a case that the first lens tube (120) is subject to an external force, the second elastic member (230) enables the first lens tube (120) to move in a direction close to the photosensitive chip.

11. The camera module according to claim 1, wherein the camera module further comprises a second lens tube (240), the second lens tube (240) is sleeved on the driving lens tube (150), the first lens tube (120) is sleeved on the second lens tube (240), one of the first lens tube (120) and the second lens tube (240) is provided with the first spiral guide groove (241), and the other is provided with the first matching protrusion (121).

12. The camera module according to claim 11, wherein the camera module further comprises a driven lens tube (250), the driven lens tube (250) is connected to the driving lens tube (150), the second lens tube (240) is sleeved outside the driven lens tube (250), the driven lens tube (250) is provided with a second matching protrusion (251), the driving lens tube (150) is provided with a second spiral guide groove (154), and the driven lens tube (250) is capable of moving with the cooperation of the second matching protrusion (251) and the second spiral guide groove (154),
the driven lens tube (250) is provided with a first limiting vertical groove (252) that extends in the first direction, the first lens tube (120) is provided with the first matching protrusion (121), and one end of the first matching protrusion (121) penetrates the first spiral guide groove (241) and cooperates with the first limiting vertical groove (252).

13. The camera module according to claim 12, wherein the driving lens tube (150) is provided with a first driving groove (155) that extends in the first direction, the second lens tube (240) is provided with a first driving protrusion (242), and the first driving protrusion (242) cooperates with the first driving groove (155),
the driven lens tube (250) is provided with a second driving groove (253) that extends in a circumferential direction of the driven lens tube (250), the second lens tube (240) is provided with a second driving protrusion (243), and the second driving protrusion (243) cooperates with the second driving groove (253).

14. The camera module according to claim 12, wherein the first spiral guide groove (241) and the second spiral guide groove (154) are both linear guide grooves; and/or
the first matching protrusion (121) is provided with a first matching surface, and the first matching surface is in contact with an inner wall of the first spiral guide groove (241); and/or
the second matching protrusion (251) is provided with a second matching surface, and the second matching surface is in contact with an inner wall of the second spiral guide groove (154).

15. An electronic device, **characterized by** comprising the camera module according to any one of claims 1 to 14.

## Patentansprüche

1. Kameramodul, **dadurch gekennzeichnet, dass** es Folgendes umfasst: eine Basis (110), einen lichtempfindlichen Chip, einen ersten Linsentubus (120), eine erste Linse (130), eine zweite Linse (140), einen Antriebslinsentubus (150), einen ersten Träger (160), einen ersten Antriebsmechanismus (170) und einen zweiten Antriebsmechanismus (180), wobei
der lichtempfindliche Chip in der Basis (110) angeordnet ist, der Antriebslinsentubus (150) drehbar mit der Basis (110) verbunden ist, der erste Linsentubus (120) auf dem Antriebslinsentubus (150) aufgesteckt ist, der erste Linsentubus (120) über einen ersten passenden Überstand (121) und eine erste spiralförmige Führungsnut (241) mit dem Antriebslinsentubus (150) verbunden ist, der erste Träger (160) beweglich auf der Basis (110) angeordnet ist, der erste Linsentubus (120) mit der ersten Linse (130) versehen ist, der erste Träger (160) mit der zweiten Linse (140) versehen ist, die zweite Linse (140) zwischen dem lichtempfindlichen Chip und der ersten Linse (130) angeordnet ist,
der erste Antriebsmechanismus (170) mit dem Antriebslinsentubus (150) verbunden ist, der erste Antriebsmechanismus (170) durch den Antriebslinsentubus (150) den ersten Linsentubus (120) antreibt, um sich in einer ersten Richtung unter Zusammenwirken des ersten passenden Überstands (121) und der ersten spiralförmigen Führungsnut (241) zu bewegen,
der zweite Antriebsmechanismus (180) eine erste Antriebsquelle (181), eine Schraube (182) und eine Mutter (183) umfasst, die erste Antriebsquelle (181) auf der Basis (110) angeordnet ist, die erste Antriebsquelle (181) mit der Schraube (182) verbunden ist, die Mutter (183) mit der Schraube (182) gewindemäßig zusammenwirkt, die Mutter (183) mit dem ersten Träger (160) verbunden ist, die Mutter (183) den ersten Träger (160) antreibt, um sich in die erste Richtung zu bewegen, und die erste Richtung eine Richtung nahe an oder weg von dem lichtempfindlichen Chip ist.

2. Kameramodul nach Anspruch 1, wobei der zweite Antriebsmechanismus (180) ferner ein drittes elastisches Element (184) umfasst, wobei das dritte elastische Element (184) zwischen der Mutter (183) und dem ersten Träger (160) angeordnet ist,
die Mutter (183) durch das dritte elastische Element (184) den ersten Träger (160) antreibt, um sich in die erste Richtung zu bewegen, und
in einem Fall, dass der erste Träger (160) einer äußeren Kraft ausgesetzt ist, ermöglicht das dritte elastische Element (184), dass sich der erste Träger (160) in eine Richtung nahe dem lichtempfindlichen Chip bewegt.

3. Kameramodul nach Anspruch 1, wobei ein Rand des ersten Trägers (160) mit einer Kerbe (162) versehen ist und der zweite Antriebsmechanismus (180) zumindest teilweise in der Kerbe (162) angeordnet ist.

4. Kameramodul nach Anspruch 1, wobei das Kameramodul ferner einen zweiten Träger (190) und eine dritte Linse (210) umfasst, der zweite Träger (190) beweglich auf dem ersten Träger (160) angeordnet ist, der zweite Träger (190) mit der dritten Linse (210) versehen ist und die dritte Linse (210) zwischen der ersten Linse (130) und der zweiten Linse (140) angeordnet ist.

5. Kameramodul nach Anspruch 4, wobei das Kameramodul ferner ein erstes elastisches Element (220) umfasst und das erste elastische Element (220) zwischen dem ersten Träger (160) und dem zweiten Träger (190) angeordnet ist,
der zweite Antriebsmechanismus (180) durch den ersten Träger (160) und das erste elastische Element (220) den zweiten Träger (190) antreibt, um sich in die erste Richtung zu bewegen, und
in einem Fall, dass der zweite Träger (190) einer äußeren Kraft ausgesetzt ist, ermöglicht das erste elastische Element (220), dass sich der zweite Träger (190) in eine Richtung nahe dem lichtempfindlichen Chip bewegt.

6. Kameramodul nach Anspruch 5, wobei das Kameramodul ferner eine erste Führungssäule (270) umfasst, wobei entweder die Basis (110) und der erste Träger (160) mit einem ersten Führungsteil (161) versehen ist und das andere fest mit der ersten Führungssäule (270) verbunden ist und der erste Führungsteil (161) gleitend mit der ersten Führungssäule (270) zusammenwirkt; und
das Kameramodul ferner eine zweite Führungssäule (280) umfasst, wobei entweder der erste Träger (160) oder der zweite Träger (190) mit einem zweiten Führungsteil versehen ist und der andere fest mit der zweiten Führungssäule (280) verbunden ist und der zweite Führungsteil gleitend mit der zweiten Führungssäule (280) zusammenwirkt.

7. Kameramodul nach Anspruch 6, wobei ein Rand des ersten Trägers (160) mit dem ersten Führungsteil (161) versehen ist, der erste Führungsteil (161) eine Führungskerbe ist und ein Rand des zweiten Trägers (190) mit dem zweiten Führungsteil versehen ist und der zweite Führungsteil ein Führungsloch ist.

8. Kameramodul nach Anspruch 7, wobei eine dem ersten Träger (160) zugewandte Oberfläche des zweiten Trägers (190) mit einem Verlängerungsteil (192) versehen ist, der Verlängerungsteil (192) mit dem zweiten Führungsteil versehen ist und der Verlängerungsteil (192) in der Lage ist, sich zumindest teilweise in das erste elastische Element (220) zu erstrecken.

9. Kameramodul nach Anspruch 4, wobei das Kameramodul ferner einen Linsenträger (290) umfasst, der Linsenträger (290) mit der dritten Linse (210) versehen ist, ein Rand des Linsenträgers (290) mit einem Installationsüberstand (291) versehen ist, der zweite Träger (190) mit einer Installationsnut (193) versehen ist und der Installationsüberstand (291) mit der Installationsnut (193) zusammenwirkt; und/oder
der zweite Träger (190) ein fünftes Ende und ein sechstes Ende aufweist und ein Abstand zwischen dem fünften Ende und dem sechsten Ende besteht.

10. Kameramodul nach Anspruch 1, wobei das Kameramodul ferner ein zweites elastisches Element (230) umfasst, der Antriebslinsentubus (150) ein Körperelement (151) und ein Übertragungselement (152) umfasst, die getrennt angeordnet sind, ein erstes Ende des zweiten elastischen Elements (230) mit dem Körperelement (151) verbunden ist, ein zweites Ende des zweiten elastischen Elements (230) mit dem Übertragungselement (152) verbunden ist und der erste Antriebsmechanismus (170) mit dem Übertragungselement (152) verbunden ist,
der erste Antriebsmechanismus (170) nacheinander durch das Übertragungselement (152) das zweite elastische Element (230) und das Körperelement (151) den ersten Linsentubus (120) antreibt, um sich in die erste Richtung zu bewegen, und
in einem Fall, dass der erste Linsentubus (120) einer äußeren Kraft ausgesetzt ist, ermöglicht das zweite elastische Element (230), dass sich der erste Linsentubus (120) in eine Richtung nahe dem lichtempfindlichen Chip bewegt.

11. Kameramodul nach Anspruch 1, wobei das Kameramodul ferner einen zweiten Linsentubus (240) umfasst, der zweite Linsentubus (240) auf dem Antriebslinsentubus (150) aufgesteckt ist, der erste Linsentubus (120) auf dem zweiten Linsentubus (240) aufgesteckt ist, entweder der erste Linsentubus (120) oder der zweite Linsentubus (240) mit der ersten spiralförmigen Führungsnut (241) versehen ist und der andere mit dem ersten passenden Überstand (121) versehen ist.

12. Kameramodul nach Anspruch 11, wobei das Kameramodul ferner einen angetriebenen Linsentubus (250) umfasst, der angetriebene Linsentubus (250) mit dem Antriebslinsentubus (150) verbunden ist, der zweite Linsentubus (240) außerhalb des angetriebenen Linsentubus (250) aufgesteckt ist, der angetriebene Linsentubus (250) mit einem zweiten passenden Überstand (251) versehen ist, der Antriebslinsentubus (150) mit einer zweiten spiralförmigen Führungsnut (154) versehen ist und der angetriebene Linsentubus (250) in der Lage ist, sich unter Zusammenwirken des zweiten passenden Überstands (251) und der zweiten spiralförmigen Führungsnut (154) zu bewegen,
der angetriebene Linsentubus (250) mit einer ersten vertikalen Begrenzungsnut (252) versehen ist, die sich in der ersten Richtung erstreckt, der erste Linsentubus (120) mit dem ersten passenden Überstand (121) versehen ist und ein Ende des ersten passenden Überstands (121) die erste spiralförmige Führungsnut (241) durchdringt und mit der ersten vertikalen Begrenzungsnut (252) zusammenwirkt.

13. Kameramodul nach Anspruch 12, wobei der Antriebslinsentubus (150) mit einer ersten Antriebsnut (155) versehen ist, die sich in der ersten Richtung erstreckt, der zweite Linsentubus (240) mit einem ersten Antriebsüberstand (242) versehen ist und der erste Antriebsüberstand (242) mit der ersten Antriebsnut (155) zusammenwirkt,
der angetriebene Linsentubus (250) mit einer zweiten Antriebsnut (253) versehen ist, die sich in einer Umfangsrichtung des angetriebenen Linsentubus (250) erstreckt, der zweite Linsentubus (240) mit einem zweiten Antriebsüberstand (243) versehen ist und der zweite Antriebsüberstand (243) mit der zweiten Antriebsnut (253) zusammenwirkt.

14. Kameramodul nach Anspruch 12, wobei die erste spiralförmige Führungsnut (241) und die zweite spiralförmige Führungsnut (154) beide lineare Führungsnuten sind; und/oder
der erste passende Überstand (121) mit einer ersten passenden Oberfläche versehen ist und die erste passende Oberfläche in Kontakt mit einer Innenwand der ersten spiralförmigen Führungsnut (241) ist; und/oder
der zweite passende Überstand (251) mit einer zweiten passenden Oberfläche versehen ist und die zweite passende Oberfläche in Kontakt mit einer Innenwand der zweiten spiralförmigen Führungsnut (154) ist.

15. Elektronische Vorrichtung, **dadurch gekennzeichnet, dass** sie das Kameramodul nach einem der Ansprüche 1 bis 14 umfasst.

## Revendications

1. Module de caméra, **caractérisé en ce qu'**il comprend :
une base (110), une puce photosensible, un premier tube de lentille (120), une première lentille (130), une deuxième lentille (140), un tube de lentille d'entraînement (150), un premier support (160), un premier mécanisme d'entraînement (170) et un second mécanisme d'entraînement (180), dans lequel
la puce photosensible est disposée dans la base (110), le tube de lentille d'entraînement (150) est relié de manière rotative à la base (110), le premier tube de lentille (120) est manchonné sur le tube de lentille d'entraînement (150), le premier tube de lentille (120) est relié au tube de lentille d'entraînement (150) par l'intermédiaire d'une première saillie correspondante (121) et d'une première rainure de guidage en spirale (241), le premier support (160) est disposé de manière mobile sur la base (110), le premier tube de lentille (120) est pourvu de la première lentille (130), le premier support (160) est pourvu de la deuxième lentille (140), la deuxième lentille (140) est située entre la puce photosensible et la première lentille (130),
le premier mécanisme d'entraînement (170) est relié au tube de lentille d'entraînement (150), le premier mécanisme d'entraînement (170) entraîne, à travers le tube de lentille d'entraînement (150), le premier tube de lentille (120) à se déplacer dans une première direction avec la coopération de la première saillie correspondante (121) et de la première rainure de guidage en spirale (241),
le second mécanisme d'entraînement (180) comprend une première source d'entraînement (181), une vis (182) et un écrou (183), la première source d'entraînement (181) est disposée sur la base (110), la première source d'entraînement (181) est reliée à la vis (182), l'écrou (183) coopère par filetage avec la vis (182), l'écrou (183) est relié au premier support (160), l'écrou (183) entraîne le premier support (160) à se déplacer dans la première direction, et la première direction est une direction proche ou éloignée de la puce photosensible.

2. Module de caméra selon la revendication 1, dans lequel le second mécanisme d'entraînement (180) comprend en outre un troisième élément élastique (184), le troisième élément élastique (184) est disposé entre l'écrou (183) et le premier support (160),
l'écrou (183) entraîne, à travers le troisième élément élastique (184), le premier support (160) à se déplacer dans la première direction, et
dans le cas où le premier support (160) est soumis à une force externe, le troisième élément élastique (184) permet au premier support (160) de se déplacer dans une direction proche de la puce photosensible.

3. Module de caméra selon la revendication 1, dans lequel un bord du premier support (160) est pourvu d'une encoche (162), et le second mécanisme d'entraînement (180) est au moins partiellement situé dans l'encoche (162).

4. Module de caméra selon la revendication 1, dans lequel le module de caméra comprend en outre un second support (190) et une troisième lentille (210), le second support (190) est disposé de manière mobile sur le premier support (160), le second support (190) est pourvu de la troisième lentille (210), et la troisième lentille (210) est située entre la première lentille (130) et la deuxième lentille (140).

5. Module de caméra selon la revendication 4, dans lequel le module de caméra comprend en outre un premier élément élastique (220), et le premier élément élastique (220) est disposé entre le premier support (160) et le second support (190),
le second mécanisme d'entraînement (180) entraîne, à travers le premier support (160) et le premier élément élastique (220), le second support (190) à se déplacer dans la première direction, et
lorsque le second support (190) est soumis à une force externe, le premier élément élastique (220) permet au second support (190) de se déplacer dans une direction proche de la puce photosensible.

6. Module de caméra selon la revendication 5, dans lequel le module de caméra comprend en outre une première colonne de guidage (270), l'un entre la base (110) et le premier support (160) est pourvu d'une première partie de guidage (161), et l'autre est fermement relié à la première colonne de guidage (270), et la première partie de guidage (161) coopère de manière coulissante avec la première colonne de guidage (270) ; et
le module de caméra comprend en outre une seconde colonne de guidage (280), l'un entre le premier support (160) et le second support (190) est pourvu d'une seconde partie de guidage, et l'autre est fermement relié à la seconde colonne de guidage (280), et la seconde partie de guidage coopère de manière coulissante avec la seconde colonne de guidage (280).

7. Module de caméra selon la revendication 6, dans lequel un bord du premier support (160) est pourvu de la première partie de guidage (161), la première partie de guidage (161) est une encoche de guidage, et un bord du second support (190) est pourvu de la seconde partie de guidage, et la seconde partie de guidage est un trou de guidage.

8. Module de caméra selon la revendication 7, dans lequel une surface, faisant face au premier support (160), du second support (190) est pourvue d'une partie d'extension (192), la partie d'extension (192) est pourvue de la seconde partie de guidage, et la partie d'extension (192) est capable de s'étendre au moins partiellement dans le premier élément élastique (220).

9. Module de caméra selon la revendication 4, dans lequel le module de caméra comprend en outre un support de lentille (290), le support de lentille (290) est pourvu de la troisième lentille (210), un bord du support de lentille (290) est pourvu d'une saillie d'installation (291), le second support (190) est pourvu d'une rainure d'installation (193), et la saillie d'installation (291) coopérant avec la rainure d'installation (193) ; et/ou le second support (190) a une cinquième extrémité et une sixième extrémité, et il y a un intervalle entre la cinquième extrémité et la sixième extrémité.

10. Module de caméra selon la revendication 1, dans lequel le module de caméra comprend en outre un deuxième élément élastique (230), le tube de lentille d'entraînement (150) comprend un élément de corps (151) et un élément de transmission (152) qui sont disposés séparément, une première extrémité du deuxième élément élastique (230) est reliée à l'élément de corps (151), une deuxième extrémité du deuxième élément élastique (230) est reliée à l'élément de transmission (152), et le premier mécanisme d'entraînement (170) est relié à l'élément de transmission (152),
le premier mécanisme d'entraînement (170) entraîne, de manière séquentielle à travers l'élément de transmission (152), le deuxième élément élastique (230) et l'élément de corps (151), le premier tube de lentille (120) pour se déplacer dans la première direction, et
lorsque le premier tube de lentille (120) est soumis à une force externe, le deuxième élément élastique (230) permet au premier tube de lentille (120) de se déplacer dans une direction proche de la puce photosensible.

11. Module de caméra selon la revendication 1, dans lequel le module de caméra comprend en outre un second tube de lentille (240), le second tube de lentille (240) est manchonné sur le tube de lentille d'entraînement (150), le premier tube de lentille (120) est manchonné sur le second tube de lentille (240), l'un du premier tube de lentille (120) et du second tube de lentille (240) est pourvu de la première rainure de guidage en spirale (241), et l'autre est pourvu de la première saillie correspondante (121).

12. Module de caméra selon la revendication 11, dans lequel le module de caméra comprend en outre un tube de lentille entraîné (250), le tube de lentille entraîné (250) est relié au tube de lentille d'entraînement (150), le second tube de lentille (240) est manchonné à l'extérieur du tube de lentille entraîné (250), le tube de lentille entraîné (250) est pourvu d'une seconde saillie correspondante (251), le tube de lentille d'entraînement (150) est pourvu d'une seconde rainure de guidage en spirale (154), et le tube de lentille entraîné (250) est capable de se déplacer avec la coopération de la seconde saillie correspondante (251) et de la seconde rainure de guidage en spirale (154),
le tube de lentille entraîné (250) est pourvu d'une première rainure verticale de limitation (252) qui s'étend dans la première direction, le premier tube de lentille (120) est pourvu de la première saillie correspondante (121) et une extrémité de la première saillie correspondante (121) pénètre dans la première rainure de guidage en spirale (241) et coopère avec la première rainure verticale de limitation (252).

13. Module de caméra selon la revendication 12, dans lequel le tube de lentille d'entraînement (150) est pourvu d'une première rainure d'entraînement (155) qui s'étend dans la première direction, le second tube de lentille (240) est pourvu d'une première saillie d'entraînement (242), et la première saillie d'entraînement (242) coopère avec la première rainure d'entraînement (155),
le tube de lentille entraîné (250) est pourvu d'une seconde rainure d'entraînement (253) qui s'étend dans une direction circonférentielle du tube de lentille entraîné (250), le second tube de lentille (240) est pourvu d'une seconde saillie d'entraînement (243), et la seconde saillie d'entraînement (243) coopère avec la seconde rainure d'entraînement (253).

14. Module de caméra selon la revendication 12, dans lequel la première rainure de guidage en spirale (241) et la seconde rainure de guidage en spirale (154) sont toutes deux des rainures de guidage linéaires ; et/ou la première saillie correspondante (121) est pourvue d'une première surface correspondante, et la première surface correspondante est en contact avec une paroi interne de la première rainure de guidage en spirale (241) ; et/ou
la seconde saillie correspondante (251) est pourvue d'une seconde surface correspondante, et la seconde saillie correspondante est en contact avec une paroi interne de la seconde rainure de guidage en spirale (154).

15. Dispositif électronique, **caractérisé en ce qu'**il comprend le module de caméra selon l'une quelconque des revendications 1 à 14.
